# EUROPÄISCHE PATENTSCHRIFT

(11) **EP 0 432 142 B1**
(45) Veröffentlichungstag und Bekanntmachung des Hinweises auf die Patenterteilung: **10.05.1995**
(21) Anmeldenummer: 91103247.2
(22) Anmeldetag: 16.12.1985
(51) Int. Cl.: A61C 17/14

(54) **Zahnärztlicher Abscheider**
Dental separator
Séparateur dentaire

(30) Priorität: 17.12.1984 AT 3986/84
(43) Veröffentlichungstag der Anmeldung: 12.06.1991
(62) Teilanmeldung aus: 86900003.4
(73) Patentinhaber: Trawöger, Werner, 6020 Innsbruck (AT); PREGENZER, Bruno, 6173 Oberperfuss (AT)
(72) Erfinder: Trawöger, Werner, 6020 Innsbruck (AT); PREGENZER, Bruno, 6173 Oberperfuss (AT)
(74) Vertreter: Torggler, Paul, Dr.

(56) Entgegenhaltungen:
- EP-A- 0 102 000
- EP-A- 0 108 983
- DE-A- 2 713 321
- FR-A- 2 103 990
- FR-A- 2 196 833
- US-A- 2 759 476

## Beschreibung

Die Erfindung betrifft einen zahnärztlichen Abscheider mit einem nach unten abnehmbaren Sammelbehälter zum gemeinsamen Sammeln von Feststoffen, die aus einem ersten, mittels einer Flügelradpumpe aus einer unter Unterdruck stehenden Saugluftabscheideeinrichtung ausgetragenen Feststoff-Flüssigkeitsgemisch und aus einem zweiten, aus einer Speischale durch Schwerkraft abfließenden Feststoff-Flüssigkeitsgemisch abgetrennt werden, wobei an der Druckseite der Flügelradpumpe ein Rückschlagventil vorgesehen ist.

Derartige Abscheider sind beispielsweise aus den DE-A-32 31 272 (& EP-A-0 102 000) und 32 42 212 (& EP-A-0 108 983) bekannt. Dort wird versucht, die Metallteile aus den vereinigten Feststoff-Flüssigkeitsgemischen in einen syphonartigen Sammelbehälter abzutrennen, der Filtereinsätze aufweisen kann. Ohne Filtereinsätze wird die Ablagerung auf Grund der Strömung stark gestört, sodaß die Ausbeute gering ist. Filtereinsätze verlegen sich jedoch verhältnismäßig rasch, da der feine Feststoffanteil groß ist. Die Rückgewinnung der Feststoffe aus den Filtereinsätzen stellt eine zusätzliche Arbeit dar, wobei die Motivation für eine Rückgewinnung der Metallteile nicht besonders groß ist, da die Flüssigkeit aufgrund ihrer Zusammensetzung (Blut, Speichel, Wasser, Eiter) eine eher ekelerregende Substanz ist, die auch eine hohe Bakterienkonzentration aufweist.

Die Erfindung hat es sich nun zur Aufgabe gestellt, einen Abscheider der eingangs genannten Art zu entwickeln, der bei möglichst einfacher Konstruktion eine möglichst vollständige Dreiphasentrennung bewirkt, sodaß neben der Reinluft auch reine, das heißt feststofffreie Flüssigkeit den Abscheider verläßt und ohne Filter alle Feststoffe gesammelt werden können.

Erfindungsgemäß wird dies nun dadurch erreicht, daß der Zusammenfluß der beiden Gemische im Eintrittsraum einer Zentrifuge ausgebildet ist, daß die Zentrifuge auf der den Eintrittsraum durchsetzenden Antriebswelle der Flügelradpumpe angeordnet ist und den abnehmbaren Sammelbehälter für die Feststoffe aufweist.

Die Zentrifuge ermöglicht aufgrund der Zentrifugalabscheidung auch bei einer außergewöhnlich hohen Zuflußrate die Gewinnung praktisch aller Feststoffe. Weiters ergibt sich durch den unmittelbaren Anbau der Zentrifuge an die Pumpe eine äußerst kompakte Einheit mit geringer Bauhöhe, sodaß der Abscheider in eine zahnärztliche Behandlungsapparatur eingebaut werden kann.

Das Pumpengehäuse ist bevorzugt aus drei Teilen zusammengesetzt, wobei sein Oberteil den Motor und die Hilfspumpe aufnimmt und den Anbau des Saugluftabscheidegehäuses ermöglicht. An der Unterseite ist am Oberteil eine kreisförmige Aufnahme für den zylindrischen Mittelteil vorgesehen, der den Zentrifugeneintrittsraum begrenzt, und an den der ebenfalls zylindrische Unterteil ansetzbar ist. Dabei ist bevorzugt vorgesehen, daß der Zentrifugenbehälter einen äußeren Ringflansch aufweist, wobei das Unterteil des Pumpengehäuses einen Ringkanal umschließt, an den annähernd tangential ein Ablaufkanal anschließt. Durch die zylindrische Ausbildung des Unterteiles läßt sich der Ablaufkanal in die für den Einbau günstigste Lage verdrehen. Der Ringkanal ist dabei nach oben durch eine Leitfläche vom Zentrifugeneintrittsraum abgeteilt, die unter Belassung eines Spaltes in den Zentrifugenbehälter führt. Auch die Ablaufleitung der Speischale kann in jede geeignete Lage verdreht werden. Die von der Speischale kommende Ablaufleitung kann auch noch den Antriebsmotor umgeben, sodaß das Spülwasser dessen Kühlung bewirkt.

Nachstehend wird nun die Erfindung an Hand der beiliegenden Zeichnungen näher beschrieben. Darin zeigen:

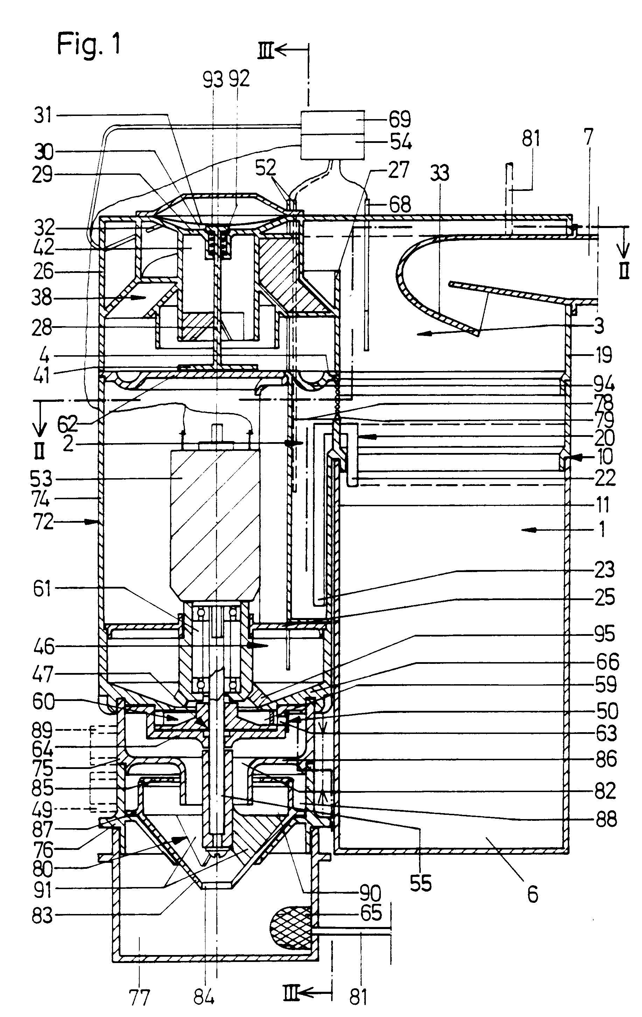

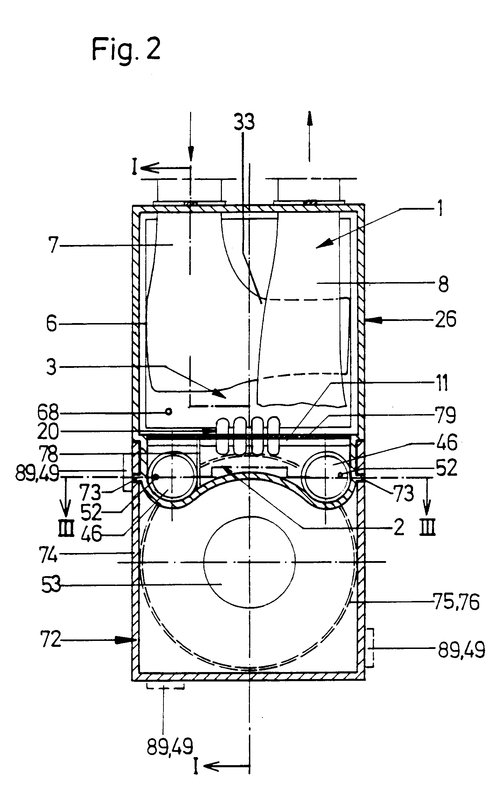

- Fig. 1: einen Vertikalschnitt durch einen Abscheider nach der Linie I-I der Fig. 2 und
- Fig. 2 und 3: Schnitte nach den Linien II-II und III-III der Fig. 1.

Der Zentrifuge 80 des Abscheiders wird das zu trennende Feststoff-Flüssigkeitsgemisch einerseits durch Schwerkraft aus einer Speischale oder dergleichen, andererseits durch die Absauganlage aus dem Mund des Patienten zugeführt. Ein Gehäuse 10, das durch eine Trennwand 11, die mit Abstand zur Gehäuseabdeckung 4 endet, ist in einen Absetzbehälter 1 und einen Nebenbehälter 2 unterteilt. Oberhalb beider verbleibt ein gemeinsamer Raum, der Teil eines Luftabscheideraumes 3 ist, der in einem Aufsatz 26 ausgebildet ist. Oberhalb des Absetzbehälters 1 ist ein Einlaß 7 für das von einem zahnärztlichen Saughandstück kommende Feststoff-Flüssigkeits-Saugluftgemisch vorgesehen, wobei diesem eine erste Umlenkfläche 33 zugeordnet ist, sodaß der Endteil des Einlasses etwa U-förmig ausgebildet ist. Die Umlenkfläche 33 erweitert sich vom Einlaß 7 aus in der Breite zur Außenwand 19 des Gehäuses hin. Der Absetzbehälter 1 bildet einen abnehmbaren Sammeltopf 6, der von unten aufgeschoben und dichtend gehalten ist. Das durch den Einlaß 7 und die Umlenkfläche 33 strömende Gemisch trennt durch die Umlenkung, die Verwirbelung und den Aufprall an die Außenwand 19 Feststoffe und Flüssigkeit von der Saugluft ab, die sich im Absetzbehälter 1 sammeln. Dieser bildet gleichzeitig eine Beruhigungszone für die Ablagerung der Feststoffe am Boden des Sammeltopfes 6. Mit Erreichen einer bestimmten Füllhöhe der Flüssigkeit im Absetzbehälter 1 verdrängt weiter zufließendes Feststoff-Flüssigkeitsgemisch geklärte, jedoch noch Feststoffe enthaltende Flüssigkeit über eine oberhalb des maximalen Feststoffablagerungsniveaus angeordnete Übertrittseinrichtung in den Nebenbehälter 2, die beliebiger Art sein kann. Vorzugsweise ist ein diskontinuierlicher Flüssigkeitsübertritt durch den gezeigten Saugheber 20 vorgesehen, dessen längerer Schenkel 23 im Nebenbehälter 2 mündet. Die Eintrittsöffnung des kürzeren Schenkels 22 liegt dabei oberhalb der maximalen Ablagerungshöhe und unterhalb des Einsteckrandes des Sammeltopfes 6 und das Überlaufniveau des Saughebers 20 liegt tiefer als der obere Rand der Trennwand, von dem ein Gitter 79 zur Abdeckung 4 hochgezogen ist. Der Nebenbehälter 2 ist von einem weiteren Gehäuse 72 umgeben und mit einem Flüssigkeitsauslaß 9 versehen, dessen Austrittsöffnung 63 gegen den Eintritt von Falschluft durch ein Rückschlagventil 50 gesichert ist.

Die Entleerung des Nebenbehälters erfolgt mittels einer als Flügelradpumpe 47 ausgebildeten Hilfspumpe über ein hochstehendes Rohrstück 45 und den Flüssigkeitsauslaß 9, dessen Austrittsöffnung 63 mit geringem Abstand oberhalb des Bodens 64 seitlich in der Pumpenkammer 60 ausgebildet ist. In diese ist der Ansaugkanal 46 der Flügelradpumpe 47 eingesetzt, der eine Bodenplatte 66 mit einer in die Pumpenkammer mündenden mittleren Öffnung aufweist. Das Gehäuse 72 besteht aus einem den Motor 53 der Flügelradpumpe 47 aufnehmenden Oberteil 74, dessen Oberseite 62 mit der Abdeckung 4 fluchtet und den Zyklon 38 des Luftabscheideraumes 3 nach unten begrenzt, einem Mittelteil 75 und einem Unterteil 76. Die vertikal verlaufende Antriebswelle 55 ist in einem Lagerkörper 61 gelagert, der in einen den Motoraufnahmeraum vom Ansaugkanal 46 trennenden Boden 25 eingesetzt ist, durch einen erweiterten Abschnitt des Ansaugkanals 46 ragt und an der horizontalen Bodenplatte 66 über Stützstege 95 abgestützt ist. Vom erweiterten Teil des Ansaugkanals 46 führt eine Luftleitung 71 durch das durch den Boden 25 führende Rohrstück 45 zurück in den Luftabscheideraum 3, wobei diese durch eine Trennwand 78 vom Nebenbehälter 2 abgeteilt ist. Die Antriebswelle 65 trägt direkt unterhalb der Öffnung in der Bodenplatte 66 das gekrümmte Leitflächen aufweisende Flügelrad 59 der Flügelradpumpe 47. Aufgrund des die Austrittsöffnung 63 gegen Falschlufteintritt sichernden Rückschlagventils 50 ist unterhalb des die Pumpenkammer 60 vom Mittelteil 75 trennenden Bodens 64 Normaldruck gegeben. Die Flügelradpumpe 47 wird in Abhängigkeit vom Flüssigkeitsstand im Ansaugkanal 46 und im Nebenbehälter 2, der von Fühlern 52 abgetastet wird, über die Steuerung 54 geschaltet.

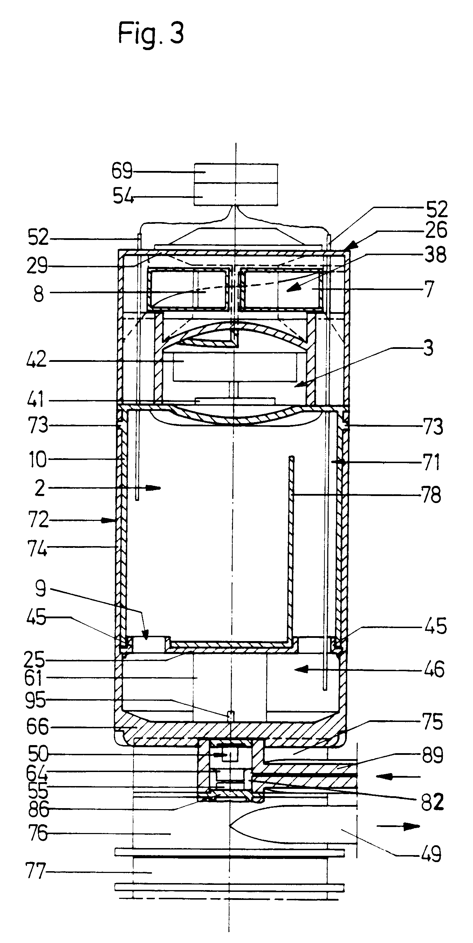

Der Mittelteil 75 des Pumpengehäuses 72 nimmt einen Zentrifugeneintrittsraum 82 auf, und ist zylindrisch ausgebildet, sodaß er in jede beliebige Stellung verdreht werden kann. Der Zentrifugeneintrittsraum 82 ist ebenfalls von der Antriebswelle 55 durchsetzt, auf der im Anschluß an das Flügelrad 59 über Stützstege 91 ein Zentrifugenbehälter 83 angeordnet ist. In den Zentrifugeneintrittsraum 82, der nach unten durch eine Leitfläche 86 begrenzt ist, die im peripheren Teil horizontal verläuft und in eine mit der Antriebswelle 55 koaxiale, in den Zentrifugeninnenraum 90 ragende Hülse übergeht, mündet im wesentlichen tangential eine Ablaufleitung 89 (Fig.3) der Speischale. Das im Zentrifugeneintrittsraum 82 sich aus der Ablaufleitung 89 und der Austrittsöffnung 63 vereinigende Gemsich fließt in die Zentrifuge 80, die im nachfolgenden Unterteil 76 des Pumpengehäuses ausgebildet ist. Der Zentrifugenbehälter 83 verjüngt sich nach unten zu einer Bodenöffnung 84, durch die abzentrifugierte Feststoffe in den auf den Unterteil 76 aufgesetzten Auffangtopf 77 gelangen, in dem sich aus der Zentrifuge 80 bei deren Stillstand gemeinsam mit Restflüssigkeit abfließende Feststoffe absetzen. Die Flüssigkeit steigt hingegen im Zentrifugenbehälter 83 nach oben und tritt über einen nach innen abstehenden Ringflansch 85 in einen äußeren Ringkanal 88 des Unterteiles 76, wobei der Ringkanal zum Auffangtopf 77 hin durch einen äußeren Ringflansch 87 des Zentrifugenbehälters 83 abgedeckt ist. Die gereinigte Flüssigkeit fließt dann über den Ablaufkanal 49 (Fig. 3) ab, der ebenso wie die Ablaufleitung 89 der Speischale in jede beliebige Stellung verdrehbar ist. Da der Auffangtopf 77 meist ein begrenztes Fassungsvermögen aufweist, das geringer als das des Sammeltopfes 6 des Absetzbehälters 1 ist, ist weiters der Auffangtopf 77 über eine Leitung 81 mit dem Gemischeinlaß 7 verbunden, wobei die Eintrittsöffnung durch ein Sieb 65 überdeckt ist. Der in der Zentrifuge 80 abgeschiedene überschüssige Feinschlamm wird somit in den Gemischeinlaß 7 zurückgesaugt, und verbleibt zu einem Teil im Absetzbehälter 1. Reste der Feststoffe werden mit der Restflüssigkeit in der bereits beschriebenen Weise wieder in den Zentrifugeneintrittsraum 82 mit Hilfe der Flügelradpumpe 47 ausgetragen.

Das Abscheidegehäuse 10 ist vom Oberteil 74 des Gehäuses 72 in einfacher Weise trennbar, sobald der Aufsatz 26 abgenommen ist. Die beiden Rohrstücke 45 bilden auch Aufsteckteile für den Nebenbehälter 2, der an der Oberseite seitliche Stifte 73 trägt, die von oben in Schlitze der Seitenwände des Gehäuses 72 einsetzbar sind.

Die von den Feststoffen und der Flüssigkeit befreite Luft wird entlang eines in Verlängerung der Trennwand 11 in den Aufsatz 26 sich erstreckenden Wandabschnittes 27 nach oben, in einer Schraubenlinie eines Zyklons 38 um ein zentrales Absaugrohr 42 nach unten, sodann an dessen Ende durch das Absaugrohr 42 wieder nach oben und schließlich durch den Reinluftauslaß 8 zur Saugpumpe gesaugt. Das Absaugrohr 42 ist durch einen Verschlußkörper 41 verschließbar, der an einem zentral durch das Absaugrohr 42 nach oben ragenden Stab 28 angeordnet ist, der die obere Abdeckung 29 des Aufsatzes 26 durchsetzt und dort einen Kopf 93 aufweist, wobei zwischen der Abdeckung 29 und dem Kopf 93 eine Druckfeder 92 angeordnet ist, sodaß der Verschlußkörper 41 in Schließrichtung beaufschlagt ist. Die obere Abdeckung 29 begrenzt eine Kammer 30, in der eine Membran 31 angeordnet ist, und über eine Leitung 32, die an den Reinluftauslaß 8 angeschlossen ist, unter Unterdruck steht. Dadurch beaufschlagt die Membran 31 den Kopf 93 und hält den Verschlußkörper 41 in Offenstellung. In die Leitung 32 ist ein Ventil 69 eingesetzt, das über eine Steuerung 54 betätigt wird, der ein Flüssigkeitsniveaufühler 68 zugeordnet ist. Steigt die Flüssigkeit im Gehäuse 10 in den Luftabscheideraum 3 an, so wird über den Niveaufühler 68 das Ventil 69 betätigt, das die Kammer 30 mit der Außenluft in Verbindung setzt, sodaß unter Wirkung der Feder 92 der Verschlußkörper 41 das Absaugrohr 42 verschließt. Vorteilhaft wird dabei gleichzeitig auch die Saugpumpe selbst abgeschaltet. Eine Auffangrinne 94 rund um den Zyklon 38 sammelt Restflüssigkeit und leitet diese ins Gehäuse 10 vorzugsweise in den darunter liegenden Nebenbehälter 2.

## Patentansprüche

1. Zahnärztlicher Abscheider mit einem nach unten abnehmbaren Sammelbehälter (77) zum gemeinsamen Sammeln von Feststoffen, die aus einem ersten, mittels einer Flügelradpumpe (47) aus einer unter Unterdruck stehenden Saugluftabscheideeinrichtung ausgetragenen Feststoff-Flüssigkeitsgemisch und aus einem zweiten, aus einer Speischale durch Schwerkraft abfließenden Feststoff-Flüssigkeitsgemisch abgetrennt werden, wobei an der Druckseite der Flügelradpumpe (47) ein Rückschlagventil (50) vorgesehen ist, dadurch gekennzeichnet, daß der Zusammenfluß der beiden Gemische im Eintrittsraum (82) einer Zentrifuge (80) ausgebildet ist, daß die Zentrifuge (80) auf der den Eintrittsraum (82) durchsetzenden Antriebswelle (55) der Flügelradpumpe (47) angeordnet ist und den abnehmbaren Sammelbehälter (77) für die Feststoffe aufweist.

2. Abscheider nach Anspruch 1, dadurch gekennzeichnet, daß der Zentrifugeneintrittsraum (82) nach unten von einer ringförmigen Leitfläche (86) des zylindrischen Mittelteiles (75) des Pumpengehäuses (72) begrenzt ist, die mit radialem Abstand in den Zentrifugenbehälter (83) ragt.

3. Abscheider nach Anspruch 1, dadurch gekennzeichnet, daß der mit der Antriebswelle (81) der Hilfspumpe (47) verbundene Zentrifugenbehälter (83) an der Außenseite einen Ringflansch (87) aufweist, wobei zwischen der Leitfläche (86), dem außenseitigen Ringflansch (87) und dem zylindrischen Unterteil (76) des Pumpengehäuses (72) ein Ringkanal (88) ausgebildet ist, an den annähernd tangential ein Ablaufkanal (49) für die Flüssigkeit anschließt.

4. Abscheider nach einem der Ansprüche 1 bis 3, dadurch gekennzeichnet, daß er als Einbaugerät in eine zahnärztliche Behandlungsapparatur ausgebildet ist.

## Claims

1. A dental separator comprising a downwardly removable collecting container (77) for jointly collecting solids which are separated from a first solid-liquid mixture which is discharged by means of a vane pump (47) from a suction air separation means which is under a reduced pressure, and a second solid-liquid mixture which drains out of a sputum bowl due to the force of gravity, wherein a non-return valve (50) is provided at the pressure side of the vane pump (47), characterised in that the confluence of the two mixtures is produced in the entry chamber (82) of a centrifuge (80), that the centrifuge (80) is arranged on the drive shaft (55) of the vane pump (47), which shaft passes through the entry chamber (82), and the centrifuge has the removable collecting container (77) for the solids.

2. A separator according to claim 1 characterised in that the centrifuge entry chamber (82) is delimited downwardly by an annular guide surface (86) of the cylindrical central portion (75) of the pump housing (72), which guide surface projects with a radial spacing into the centrifuge container (83).

3. A separator according to claim 1 characterised in that the centrifuge container (83) which is connected to the drive shaft (81) of the auxiliary pump (47) has an annular flange (87) at the outside, wherein formed between the guide surface (86), the outward annular flange (87) and the cylindrical lower portion (76) of the pump housing (72) is an annular passage (88) to which a drain passage (49) for the liquid approximately tangentially connects.

4. A separator according to one of claims 1 to 3 characterised in that it is in the form of a unit installed in a dental treatment apparatus.

## Revendications

1. Séparateur dentaire comportant un récipient collecteur (77) amovible par le bas destiné à recueillir conjointement les substances solides qui sont séparées à partir d'un premier mélange substances solides-liquide évacué à l'aide d'une pompe à roue-hélice (47) d'un dispositif de séparation d'air d'aspiration soumis à une dépression, et d'un second mélange substances solides-liquide s'écoulant par gravité d'un crachoir, étant précisé qu'un clapet anti-retour (50) est prévu du coté refoulement de la pompe à roue-hélice (47), caractérisé en ce que la réunion des deux mélanges a lieu dans l'espace d'entrée (82) d'une centrifugeuse (80), en ce que la centrifugeuse (80) est disposée sur l'arbre d'entraînement (55) de la pompe à roue-hélice (47) qui traverse l'espace d'entrée (82), et comporte le récipient collecteur amovible (77) prévu pour les substances solides.

2. Séparateur selon la revendication 1, caractérisé en ce que l'espace d'entrée de centrifugeuse (82) est délimité vers le bas par une surface de guidage annulaire (86) de la partie centrale cylindrique (75) du boîtier de pompe (72), laquelle surface pénètre suivant un écartement radial dans le récipient de centrifugeuse (83).

3. Séparateur selon la revendication 1, caractérisé en ce que le récipient de centrifugeuse (83) relié à l'arbre d'entraînement (81) de la pompe auxiliaire (47) comporte, sur le côté extérieur, une bride annulaire (87), étant précisé qu'entre la surface de guidage (86), la bride annulaire extérieure (87) et la partie inférieure cylindrique (76) du boîtier de pompe (72) est formé un canal annulaire (88) auquel fait suite approximativement tangentiellement un canal d'écoulement (49) pour le liquide.

4. Séparateur selon l'une des revendications 1 à 3, caractérisé en ce qu'il est conçu comme un outil incorporé dans un appareillage de traitement dentaire.
